# EUROPÄISCHE PATENTANMELDUNG

(11) **EP 1 881 235 A2**
(43) Veröffentlichungstag der Anmeldung: **23.01.2008**
(21) Anmeldenummer: 07005993.6
(22) Anmeldetag: 23.03.2007
(51) Int. Cl.: F16H 25/20

(54) **Von einem Antrieb antreibbarer Spindelantrieb für ein bewegbares Bauteil**

(30) Priorität: 22.07.2006 DE 102006033981
(71) Anmelder: Stabilus GmbH, 56070 Koblenz (DE)
(72) Erfinder: Frieb-Preis, Timo, 56294 Münstermaifeld (DE); Kleinmann, Michael, 56581 Melsbach (DE)
(74) Vertreter: Klein, Thomas

(57) **Zusammenfassung**

Die Erfindung bezieht sich auf einen von einem Antrieb 22 antreibbaren Spindelantrieb für ein bewegbares Bauteil, mit einer um eine Spindelachse 1 drehbaren Gewindespindel 2, auf der eine Spindelmutter 6 nicht selbsthemmend angeordnet ist, durch die ein mit dem Bauteil verbundenes Übertragungselement axial zur Spindelachse 1 bewegbar antreibbar ist. Dabei ist das Übertragungselement gegenüber einer Drehung um die Spindelachse 1 gesichert mit dem schwenkbaren Bauteil verbunden. Ein Zwischenelement ist sich axial zur Gewindespindel 2 erstreckend und relativ zur Gewindespindel 2 verdrehbar angeordnet, das gegenüber der Spindelmutter 6 gegen Verdrehung um die Spindelachse 1 gesichert ist, wobei das Zwischenelement vom Antrieb 22 drehbar antreibbar und die Gewindespindel 2 gegen Verdrehen um die Spindelachse 1 sicherbar ist.

## Beschreibung

Die Erfindung bezieht sich auf einen von einem Antrieb antreibbaren Spindelantrieb für ein bewegbares Bauteil, insbesondere für ein um eine Schwenkachse schwenkbares Bauteil, mit einer um ihre Spindelachse drehbaren Gewindespindel, auf der eine Spindelmutter nicht selbsthemmend angeordnet ist, durch die ein mit dem Bauteil verbundenes Übertragungselement axial zur Spindelachse bewegbar antreibbar ist, wobei das Übertragungselement gegenüber einer Drehung um die Spindelachse gesichert mit dem schwenkbaren Bauteil verbunden ist.

Bei einem derartigen Spindelantrieb für eine automatisch betätigbare Fahrzeugtür ist es bekannt die Gewindespindel über ein Getriebe und eine lösbare Kupplung von einem elektromotorischen Antrieb drehbar anzutreiben.

Durch einen Sensor ist eine manuelle Kraftbeaufschlagung der Fahrzeugtür erkennbar und ein entsprechendes Signal einer Steuerelektronik zuleitbar. Die Steuerelektronik steuert dann die Kupplung zum Entkoppeln des Antriebs von der Gewindespindel an, so daß die Fahrzeugtür leicht manuell bewegbar ist.

Dabei erfordert der Spindelantrieb durch eine Kupplung einen großen Bauraum. Weiterhin ist die Kupplung eine aufwendige und teure Komponente.

Aufgabe der Erfindung ist es daher einen Spindelantrieb der eingangs genannten Art zu schaffen, der ein Bewegen des bewegbaren Bauteils sowohl durch den Antrieb als auch leichtgängig manuell ermöglicht und der einen geringen Bauraum erfordert sowie einfach und kostengünstig aufgebaut ist.

Diese Aufgabe wird erfindungsgemäß dadurch gelöst, daß ein Zwischenelement sich axial zur Gewindespindel erstreckend und relativ zur Gewindespindel verdrehbar angeordnet ist, das gegenüber der Spindelmutter gegen Verdrehung um die Spindelachse gesichert ist, wobei das Zwischenelement oder die Gewindespindel vom Antrieb drehbar antreibbar und die Gewindespindel oder das Zwischenelement gegen Verdrehen um die Spindelachse sicherbar ist.

Durch diese Ausbildung kann auf eine einen erheblichen Bauraum und einen aufwendigen Aufbau erfordernde Kupplung verzichtet werden. Es ist nur eine Verdrehsicherung erforderlich, die einfach aufgebaut sein kann und nur einen geringen Einbauraum erfordert.

Vorzugsweise ist die Gewindespindel oder das Zwischenelement durch eine lösbare Bremse gegen Verdrehen um die Spindelachse sicherbar.

Eine kompakte Bauweise wird dadurch erreicht, daß das Zwischenelement ein die Gewindespindel koaxial umschließendes Führungsrohr ist.

Zur einfachen Bewegungsübertragung auf das Übertragungselement kann das Führungsrohr in seiner Rohrwandung ein oder mehrere axial sich erstreckende, radial durchgehende Längsnuten aufweisen, deren Länge wenigstens der Länge des Stellwegs der Spindelmutter auf der Gewindespindel entspricht und durch die sich Mitnehmer der Spindelmutter radial hindurch erstrecken, wobei durch die Mitnehmer das Übertragungselement axial zur Spindelachse beaufschlagbar ist.

Dabei können der oder die Mitnehmer mit ihren freien Enden in eine radial umlaufende, radial nach innen offene Ringnut des Übertragungselements eingreifen.
Zur Erhöhung der Leichtgängigkeit der manuellen Bewegbarkeit des Bauteils bestehen vorzugsweise der oder die Mitnehmer aus einem gegenüber dem Material des Übertragungselements reibungsarmen Werkstoff oder weisen einen gegenüber dem Material des Übertragungselements aus einem reibungsarmen Werkstoff bestehenden Überzug auf.

Ebenfalls zur Erhöhung der Leichtgängigkeit dient es, wenn das Übertragungselement über ein oder mehrere Lager relativ verdrehbar auf einem gewindefreien Teil der Gewindespindel gelagert ist.

Eine weitere Reduzierung des Bauraums des Spindelantriebs wird dadurch erreicht, daß das Übertragungselement ein koaxial zur Spindelachse das Zwischenelement umschließendes Übertragungsrohr ist, dessen eines Ende mit dem schwenkbaren Bauteil verbunden ist.

Damit erhält der Spindelantrieb einen teleskopischen Aufbau.

Der Antrieb könnte ein nur in eine Bewegungsrichtung antreibender Antrieb sein, wobei eine Bewegung in die andere Bewegungsrichtung manuell erfolgt.

Besonders komfortabel ist es aber, wenn der Antrieb von Zwischenelement oder Gewindespindel ein reversierbarer Antrieb ist, so daß das bewegbare Bauteil in beide Bewegungsrichtungen wahlweise durch den Antrieb oder manuell bewegbar ist.

Vorzugsweise ist der Antrieb ein motorischer, insbesondere ein elektromotorischer Antrieb.

Zu einem einfachen und geringen erforderlichen Bauraum führt es, wenn ein nutfreier Bereich des Führungsrohres ein Zahnrad trägt, in das ein von dem Antrieb drehbar antreibbares Ritzel oder ein auf einer von der Bremse arretierbaren Bremsenwelle angeordnetes Ritzel eingreift.

Eine weitere Reduzierung des erforderlichen Bauraums im Bereich des Spindelantriebs kann dadurch erreicht werden, daß der Antrieb an einer von dem Spindelantrieb entfernten Stelle angeordnet und über Übertragungsmittel, insbesondere eine flexible Welle mit dem Zwischenelement oder der Gewindespindel verbunden ist.

Ist das bewegbare Bauteil ein schwenkbares Bauteil, so ist das Übertragungselement an dem schwenkbaren Bauteil in einem radialen Abstand zur Schwenkachse angelenkt. Vorzugsweise ist das bewegbare Bauteil eine Tür oder eine Klappe eines Kraftfahrzeugs.

Die Betätigung der Bremse kann mechanisch oder aber auch elektrisch erfolgen. Eine elektrische Ansteuerung ist mittels Schalter oder auch abhängig von einer durch einen Sensor erkannten Kraftbeaufschlagung des bewegbaren Bauteils möglich.

Das bewegbare Bauteil kann ein um eine Schwenkachse schwenkbares Bauteil, aber auch ein linear bewegbares Bauteil sein.

Weiterhin können das Zwischenelement oder die Gewindespindel über ein Getriebe von dem Antrieb drehbar antreibbar sein.

Ausführungsbeispiele der Erfindung sind in der Zeichnung dargestellt und werden im folgenden näher beschrieben. Es zeigen:
- Figur 1: ein erstes Ausführungsbeispiel eines Spindelantriebs im Querschnitt
- Figur 2: ein zweites Ausführungsbeispiel eines Spindelantriebs im Querschnitt.

Die dargestellten Spindelantriebe weisen eine um eine Spindelachse 1 drehbare Gewindespindel 2 auf, auf deren beiden Enden jeweils ein Innenring eines Wälzlagers 3 angeordnet ist. Auf den Außenringen der Wälzlager 3 ist ein die Gewindespindel mit Abstand koaxial umschließendes Führungsrohr 4 angeordnet, so daß Gewindespindel 2 und Führungsrohr 4 relativ zueinander frei drehbar sind.

Einander diametral gegenüberliegend sind in dem Führungsrohr 4 radial durchgehende Längsnuten 5 ausgebildet, die sich über die Länge des Stellweges einer auf dem Gewinde der Gewindespindel 2 nicht selbsthemmend angeordneten Spindelmutter 6 erstrecken.

Die Spindelmutter 6 besitzt zwei radiale Mitnehmer 7, die radial durch die Längsnuten 5 hindurchragen und mit ihren freien Enden 8 in eine Ringnut 9 eines axial auf der äußeren Mantelfläche des Führungsrohres 4 verschiebbar geführten Übertragungsrohres 10 hineinragen. Die radial nach innen zum Führungsrohr 4 hin offene, radial umlaufende Ringnut 9 etwa gleicher Breite wie die axiale Breite der Mitnehmer 7 ist an dem einen Endbereich des Übertragungsrohres 10 ausgebildet.

Das Übertragungsrohr 10 ragt über das eine Ende der Gewindespindel 2 hinaus und ist an dem über die Gewindespindel 2 hinausragenden Ende durch einen Boden 11 verschlossen. Der Boden 11 trägt ein Gelenkauge 12, mittels dessen das Übertragungsrohr 10 an einem nicht dargestellten Bauteil anlenkbar ist, das von dem Spindelantrieb verstellbar ist, wobei das Übertragungsrohr 10 gegen Verdrehen um die Spindelachse 1 gesichert ist.

Anstatt eines Gelenkauges könnte auch eine Kugelpfanne Verwendung finden.

Das Bauteil kann eine um eine Schwenkachse schwenkbare Klappe wie z.B. eine Heckklappe eines Kraftfahrzeugs sein.

Der dem Gelenkauge 12 entgegengesetzte Endbereich des Führungsrohres 4 ragt durch eine Lageröffnung 13, in der das Führungsrohr 4 drehbar gelagert ist, in ein Gehäuse 14. Auf dem in das Gehäuse 14 ragenden Ende des Führungsrohres 4 ist ein Zahnkranz 15 fest angeordnet, in den ein Ritzel 16 eingreift.

Das Gehäuse 14 weist an seinem der Gewindespindel 2 abgewandten Ende ein zweites Gelenkauge 25 oder eine Kugelpfanne auf, mittels dessen das Gehäuse 14 an einem nicht dargestellten festen Bauelement anlenkbar ist, wobei das Gehäuse 14 gegen Verdrehen um die Spindelachse 1 gesichert ist.

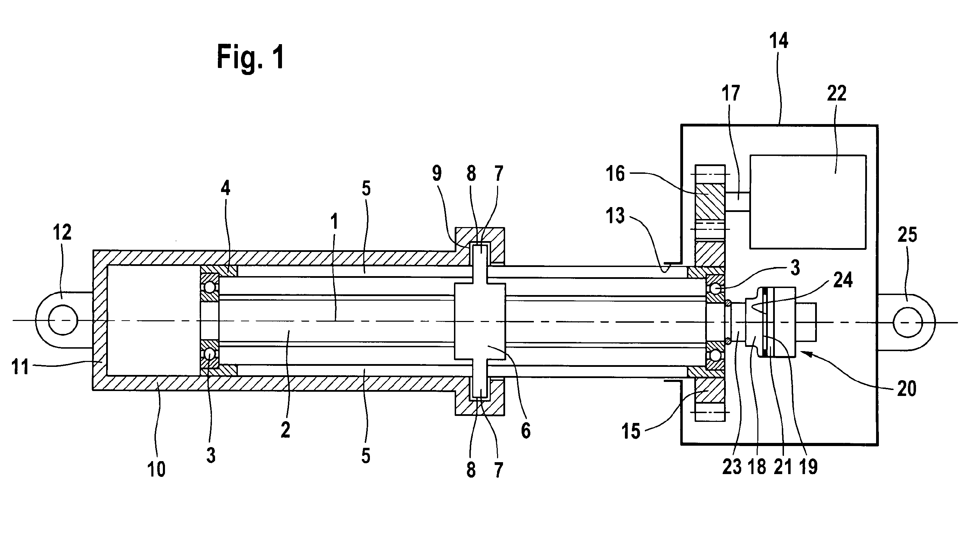

Bei dem in Figur 1 dargestellten Ausführungsbeispiel ist das Ritzel 16 ein auf der Abtriebswelle 17 sitzendes Abtriebsritzel eines in dem Gehäuse 14 angeordneten elektromotorischen Antriebs 22.

Das in das Gehäuse 14 ragende Ende der Gewindespindel 2 trägt eine Bremsscheibe 18 mit einer koaxial gerichteten ersten Bremsfläche 19.

Der ersten Bremsfläche 19 liegt koaxial eine zweite Bremsfläche 24 an einer drehfesten Bremsscheibe 21 einer an dem Gehäuse 14 angeordneten Bremse 20 gegenüber. Die Bremsscheibe 21 ist von der Bremse 20 zwischen einer an der Bremsscheibe 18 anliegenden Bremsstellung und einer von der Bremsscheibe 18 abgehobenen Freigabestellung bewegbar.

Im Fall der Anlage der Bremsscheibe 21 an der Bremsscheibe 18 ist die Gewindespindel 2 gegen Verdrehen um die Spindelachse 1 gesichert.

In der von der Bremsscheibe 18 abgehobenen Position der Bremsscheibe 21 ist die Gewindespindel 2 um die Spindelachse 1 drehbar.

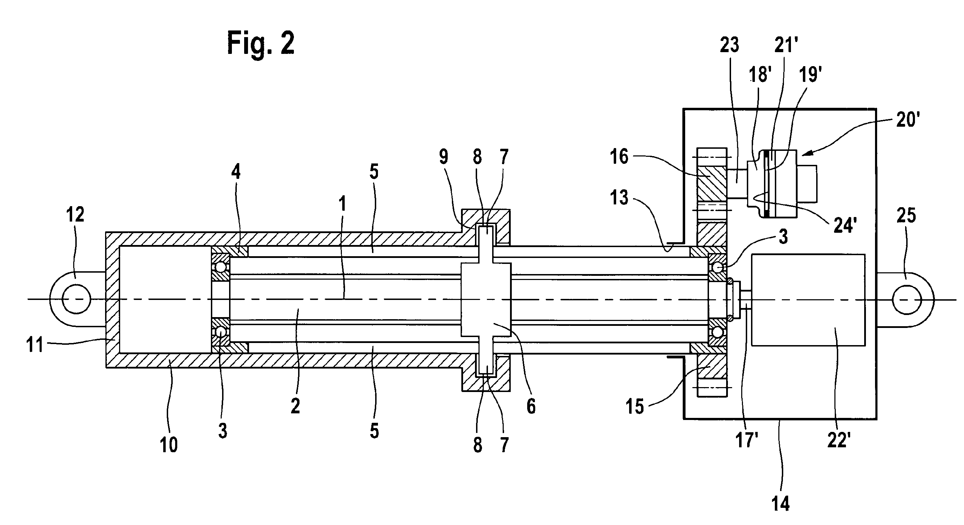

Bei dem Ausführungsbeispiel der Figur 2 ist koaxial zur Gewindespindel 2 ein elektromotorischer Antrieb 22' in dem Gehäuse 14 angeordnet, dessen Abtriebswelle 17' koaxial drehfest mit dem in das Gehäuse 14 ragenden Ende der Gewindespindel 2 verbunden.

Das Ritzel 16 ist auf einer Bremsenwelle 23 drehfest angeordnet, die an ihrem dem Ritzel 16 entgegengesetzten Ende eine koaxial gerichtete Bremsscheibe 18' mit einer ersten Bremsscheibe 19' besitzt.

Der ersten Bremsfläche 19' liegt koaxial eine zweite Bremsfläche 24 an einer drehfesten Bremsschreibe 21 einer an dem Gehäuse 14 angeordneten Bremse 20' gegenüber. Die Funktion der Bremse 20' entspricht der Funktion der Bremse 20.

Die Funktion des Ausführungsbeispiels der Figur 1 ist wie folgt:

Zum motorischen Antrieb des bewegbaren Bauteils ist die Bremse 20 geschlossen und die Gewindespindel 2 drehfest gehalten.

Wird das Führungsrohr 4 von dem elektromotorischen Antrieb 22 drehbar angetrieben, so wird mittels der drehmomentschlüssigen und axial beweglichen Verbindung zwischen Spindelmutter 6 und Führungsrohr 4 die Spindelmutter 6 gedreht.

Da die Bremse 20 geschlossen ist, bewegt sich die Spindelmutter 6 und auch das mit dem bewegbaren Bauteil verbundene Übertragungsrohr 10 in axialer Richtung.

Soll das bewegbare Bauteil durch manuelle Kraftbeaufschlagung bewegt werden, wird die Bremse 20 geöffnet. Durch die manuelle Kraftbeaufschlagung des bewegbaren Bauteils wird das Übertragungsrohr 10 axial bewegt. Dadurch dreht sich die Gewindespindel 2 wobei sie passiv durch die mit dem Übertragungsrohr 10 verbundene Spindelmutter 6 angetrieben wird. Das dazu notwenige Drehmoment und somit auch die Handkraft ist sehr gering.

Die Funktion des Ausführungsbeispiels der Figur 2 ist wie folgt:

Zum motorischen Antrieb ist die mit dem Führungsrohr 4 drehmomentschlüssig verbundene Bremse 20' geschlossen und damit auch das Führungsrohr 4 drehfest gehalten.

Wird nun die Gewindespindel 2 durch den elektromotorischen Antrieb 22' angetrieben, so wird auch auf die Spindelmutter 6 ein Drehmoment aufgebracht. Da aber Spindelmutter 6 und Führungsrohr 4 drehmomentschlüssig und axial verschiebbar miteinander verbunden sind, wird die Spindelmutter 6 und damit auch das Übertragungsrohr 10 in axialer Richtung und damit das bewegbare Bauteil bewegt.

Soll das bewegbare Bauteil durch manuelle Kraftbeaufschlagung bewegt werden, wird die Bremse 20' geöffnet.

Durch die manuelle Kraftbeaufschlagung des bewegbaren Bauteils wird das Übertragungsrohr 10 axial bewegt. Dadurch wird über die Spindelmutter 6 das Führungsrohr 4 auf der Gewindespindel 2 drehbar angetrieben.

Auch hier ist der manuelle Kraftaufwand sehr gering.

Es versteht sich, daß prinzipiell der elektromotorische Antrieb und die Bremse auch in Reihe hintereinander angeordnet sein können.

Weiterhin kann zu einem Gewichtsausgleich des schwenkbaren Bauteils zusätzlich eine mechanische Feder oder eine Gasfeder angeordnet sein.

### Bezugszeichenliste

| | | | |
|---|---|---|---|
| 1 | Spindelachse | 17 | Antriebswelle |
| 2 | Gewindespindel | 17' | Antriebswelle |
| 3 | Wälzlager | 18 | Bremsscheibe |
| 4 | Führungsrohr | 18' | Bremsscheibe |
| 5 | Längsnuten | 19 | erste Bremsfläche |
| 6 | Spindelmutter | 19' | erste Bremsfläche |
| 7 | Mitnehmer | 20 | Bremse |
| 8 | freie Enden | 20' | Bremse |
| 9 | Ringnut | 21 | Bremsscheibe |
| 10 | Übertragungsrohr | 21' | Bremsscheibe |
| 11 | Boden | 22 | elektromotorischer Antrieb |
| 12 | Gelenkauge | 22' | elektromotorischer Antrieb |
| 13 | Lageröffnung | 23 | Bremsenwelle |
| 14 | Gehäuse | 24 | zweite Bremsfläche |
| 15 | Zahnkranz | 24' | zweite Bremsfläche |
| 16 | Ritzel | 25 | Gelenkauge |

## Patentansprüche

1. Von einem Antrieb antreibbarer Spindelantrieb für ein bewegbares Bauteil, insbesondere für ein um eine Schwenkachse schwenkbares Bauteil, mit einer um ihre Spindelachse drehbaren Gewindespindel, auf der eine Spindelmutter nicht selbsthemmend angeordnet ist, durch die ein mit dem Bauteil verbundenes Übertragungselement axial zur Spindelachse bewegbar antreibbar ist, wobei das Übertragungselement gegenüber einer Drehung um die Spindelachse gesichert mit dem schwenkbaren Bauteil verbunden ist, **dadurch gekennzeichnet, daß** ein Zwischenelement sich axial zur Gewindespindel (2) erstreckend und relativ zur Gewindespindel (2) verdrehbar angeordnet ist, das gegenüber der Spindelmutter (6) gegen Verdrehung um die Spindelachse (1) gesichert ist, wobei das Zwischenelement oder die Gewindespindel vom Antrieb drehbar antreibbar und die Gewindespindel (2) oder das Zwischenelement gegen Verdrehen um die Spindelachse (1) sicherbar ist.

2. Spindelantrieb nach Anspruch 1, **dadurch gekennzeichnet, daß** die Gewindespindel (2) oder das Zwischenelement durch eine lösbare Bremse (20, 20') gegen Verdrehen um die Spindelachse (1) sicherbar ist.

3. Spindelantrieb nach einem der vorhergehenden Ansprüche, **dadurch gekennzeichnet, daß** das Zwischenelement ein die Gewindespindel (2) koaxial umschließendes Führungsrohr (4) ist.

4. Spindelantrieb nach Anspruch 3, **dadurch gekennzeichnet, daß** das Führungsrohr (4) in seiner Rohrwandung ein oder mehrere axial sich erstreckende, radial durchgehende Längsnuten (5) aufweist, deren Länge wenigstens der Länge des Stellwegs der Spindelmutter (6) auf der Gewindespindel (2) entspricht und durch die sich Mitnehmer (7) der Spindelmutter (2) radial hindurch erstrecken, wobei durch die Mitnehmer (7) das Übertragungselement axial zur Spindelachse (1) beaufschlagbar ist.

5. Spindelantrieb nach Anspruch 4, **dadurch gekennzeichnet, daß** der oder die Mitnehmer (7) mit ihren freien Enden in eine radial umlaufende, radial nach innen offene Ringnut (9) des Übertragungselements eingreifen.

6. Spindelantrieb nach einem der Ansprüche 3 bis 5, **dadurch gekennzeichnet, daß** der oder die Mitnehmer (7) aus einem gegenüber dem Material des Übertragungselements reibungsarmen Werkstoff bestehen oder einen gegenüber dem Material des Übertragungselements aus einem reibungsarmen Werkstoff bestehenden Überzug aufweisen.

7. Spindelantrieb nach einem der Ansprüche 3 bis 6, **dadurch gekennzeichnet, daß** das Übertragungselement über ein oder mehrere Lager (3) relativ verdrehbar auf einem gewindefreien Teil der Gewindespindel (2) gelagert ist.

8. Spindelantrieb nach einem der vorhergehenden Ansprüche, **dadurch gekennzeichnet, daß** das Übertragungselement ein koaxial zur Spindelachse (1) das Zwischenelement umschließendes Übertragungsrohr (10) ist, dessen eines Ende mit dem schwenkbaren Bauteil verbunden ist.

9. Spindelantrieb nach einem der vorhergehenden Ansprüche, **dadurch gekennzeichnet, daß** der Antrieb (22, 22') von Zwischenelement oder Gewindespindel (2) ein reversierbarer Antrieb (22, 22') ist.

10. Spindelantrieb nach Anspruch 9, **dadurch gekennzeichnet, daß** der Antrieb ein motorischer, insbesondere ein elektromotorischer Antrieb (22, 22') ist.

11. Spindelantrieb nach einem der Ansprüche 3 bis 10, **dadurch gekennzeichnet, daß** ein nutfreier Bereich des Führungsrohres (4) ein Zahnrad trägt, in das ein von dem Antrieb (22) drehbar antreibbares Ritzel (16) oder ein auf einer von der Bremse (20') arretierbaren Bremsenwelle (23) angeordnetes Ritzel (16) eingreift.

12. Spindelantrieb nach einem der vorhergehenden Ansprüche, **dadurch gekennzeichnet, daß** der Antrieb an einer von dem Spindelantrieb entfernten Stelle angeordnet und über Übertragungsmittel, insbesondere eine flexible Welle mit dem Zwischenelement oder der Gewindespindel verbunden ist.

13. Spindelantrieb nach einem der vorhergehenden Ansprüche 10, **dadurch gekennzeichnet, daß** das Übertragungselement an dem schwenkbaren Bauteil in einem radialen Abstand zur Schwenkachse angelenkt ist.

14. Spindelantrieb nach einem der vorhergehenden Ansprüche, **dadurch gekennzeichnet, daß** das bewegbare Bauteil eine Tür oder eine Klappe eines Kraftfahrzeugs ist.

15. Spindelantrieb nach einem der vorhergehenden Ansprüche, **dadur**ch **gekennzeichnet**, **daß** das Zwischenelement oder die Gewindespindel über ein Getriebe von dem Antrieb drehbar antreibbar ist.
